# FASCICULE DE BREVET EUROPEEN

(11) **EP 3 221 207 B1**
(45) Date de publication et mention de la délivrance du brevet: **09.01.2019**
(21) Numéro de dépôt: 15817936.6
(22) Date de dépôt: 16.11.2015
(51) Int. Cl.: B62D 25/08, B62D 27/06

(54) **ASSEMBLAGE D'INSERTS DE RENFORT PAR UN MATERIAU POLYMERE, A INSERTS DE RENFORT SEPARABLES**
ANORDNUNG ZUR VERSTÄRKUNG VON EINSÄTZEN AUS EINEM POLYMERMATERIAL MIT TRENNBAREN VERSTÄRKUNGSEINSÄTZEN
ASSEMBLY OF REINFORCEMENT INSERTS MADE FROM A POLYMER MATERIAL, WITH SEPARABLE REINFORCEMENT INSERTS

(30) Priorité: 18.11.2014 FR 1462679
(43) Date de publication de la demande: 27.09.2017
(73) Titulaire: Renault S.A.S., 92100 Boulogne-Billancourt (FR)
(72) Inventeur: AESCHLIMANN, Jean Louis, 78390 Bois d'Arcy (FR); FLANDIN, Michael, 28410 Broue (FR)
(86) Numéro de dépôt international: PCT/FR2015/053084
(87) Numéro de publication internationale: WO 2016/079404

(56) Documents cités:
- DE-A1- 10 022 360
- US-A1- 2004 105 949
- US-A1- 2011 133 517

## Description

L'invention concerne un assemblage d'inserts de renfort par un matériau polymère, à inserts de renfort séparables, notamment par découpe. L'invention concerne notamment les assemblages monobloc comprenant des inserts de renfort assemblés par un matériau polymère, sans soudage ou vissage de ces derniers. En particulier, les inserts de renfort sont assemblés uniquement par le matériau polymère les recouvrant au moins partiellement. Plus particulièrement, l'assemblage selon l'invention fait partie d'une face avant technique de véhicule automobile, notamment de la partie supérieure de celle-ci.

On appelle dans le métier « face avant technique » (FAT) une structure qui se trouve en avant du bloc moteur et qui a pour fonction de supporter différents organes, principalement le radiateur du bloc moteur. La FAT peut prendre de multiples formes. Dans certains cas, elle se réduit à une simple poutre transversale. Dans d'autres cas, elle constitue un châssis de forme plus ou moins complexe intégrant une « valise de refroidissement ». Par ce terme, on désigne l'ensemble des éléments nécessaires au refroidissement du moteur, parfois empilés en couches ou en partie superposés. La valise de refroidissement se compose classiquement du radiateur à eau de refroidissement moteur, éventuellement de l'échangeur air-air (Refroidisseur Air Suralimentation- RAS) et du condenseur. La FAT intègre en outre différentes fonctions telles que support de butées de capot, support de serrure de capot ou d'un jambage supportant la serrure de capot, etc.

Pour un gain en compacité et en masse, certaines FAT forment un cadre obtenu par assemblage de deux traverses par des montants verticaux, ce cadre comprenant des inserts de renfort recouverts au moins partiellement de matériau polymère.

Pour assurer la rigidité d'un tel cadre, il s'avère nécessaire d'assembler les inserts de renfort entre eux. Cette fixation peut être réalisée avant de recouvrir les inserts d'un matériau polymère, par exemple par soudage, vissage ou rivetage, ou après, généralement par vissage ou rivetage. Ces opérations de fixation nécessitent cependant des opérations de positionnement et de fixation qui complexifient le procédé d'assemblage et augmentent les coûts d'assemblage. En outre, ce type d'agencements ne permet pas de séparer les éléments du cadre en maintenance.

Certaines solutions consistent à créer une zone de recouvrement et d'encastrement des inserts avant de les recouvrir de matériau polymère, cette zone d'encastrement présentant une forme en T. Cette solution permet d'obtenir un assemblage robuste sans opération de soudage, vissage ou rivetage, mais résulte en un assemblage volumineux et lourd et ne permet pas un démontage des éléments encastrés en maintenance.

D'autres solutions consistent à réaliser une structure en deux parties distinctes inférieure et supérieure, chaque partie comprenant des portions de montants verticaux. Un tel assemblage permet un démontage en maintenance mais est cependant volumineux et les deux parties ne sont pas reliées entre elles.

Une autre solution consiste enfin à positionner les inserts de sorte qu'ils ne se touchent pas et à les enrober de matériaux polymère. La tenue mécanique de cet assemblage résulte alors uniquement du matériau polymère reliant les inserts et est relativement limitée. Cette solution ne permet pas non plus une séparation des inserts en maintenance.
Le document US 2011/133517 A1 décrit un assemblage selon le préambule de la revendication 1.

Il existe donc un besoin pour un assemblage robuste et léger d'inserts de renfort, qui peut être réalisé de manière simple et peu coûteuse et qui permette une séparation des inserts de renfort de l'assemblage.

L'invention vise à pallier ces inconvénients en proposant un assemblage d'un premier insert de renfort longitudinal et d'un deuxième insert de renfort longitudinal par un matériau polymère les recouvrant au moins partiellement, chaque insert de renfort présentant une paroi de fond et deux parois latérales, chaque paroi latérale étant reliée à un bord longitudinal de la paroi de fond de sorte qu'un insert de renfort présente une section transversale ouverte concave, notamment sensiblement en forme de U ou Ω, les directions longitudinales desdits inserts de renfort étant sensiblement perpendiculaires et les inserts de renfort étant orientés de sorte que leur concavité soit dirigée dans une même direction, une extrémité du deuxième insert de renfort étant emboîtée avec une extrémité du premier insert de renfort, l'assemblage étant caractérisé en ce que : lesdites extrémités des premier et deuxième inserts de renfort sont solidarisées par au moins deux éléments de jonction en matériau polymère reliant des surfaces externes du premier insert de renfort à des surfaces externes du deuxième insert de renfort, lesdits éléments de jonction recouvrant au moins partiellement lesdites surfaces externes et étant agencés pour permettre une séparation des premier et deuxième inserts après découpe desdits éléments de jonction le long d'au moins une ligne de découpe.

L'agencement selon l'invention permet de renforcer la liaison entre les deux inserts de renfort sans nécessiter de moyen de fixation spécifique, notamment du type vis, rivet, soudage, les inserts n'étant maintenus assemblés que par le matériau polymère des éléments de jonction. En outre, il est possible de séparer les premier et deuxième éléments de renfort après leur assemblage par le matériau polymère en découpant les éléments de jonction le long des lignes de découpe. Ceci permet notamment une maintenance après assemblage. Du fait de l'emboîtement des extrémités, les deux inserts peuvent être à nouveau emboîtés après découpe des éléments de jonction.

Avantageusement, une partie d'une paroi de ladite extrémité du premier insert de renfort peut être en appui plan contre une partie d'une paroi de ladite extrémité du deuxième insert de renfort, du côté convexe de ce dernier, lesdites parties de paroi comportant chacune au moins un orifice de même axe qu'un orifice de la partie de paroi adjacente. En particulier, ces parties de parois en appui plan peuvent être des parties de parois de fond desdits inserts de renfort.

Ainsi, après séparation des premier et deuxième éléments de renfort, ces derniers peuvent être réunis à nouveau par des moyens de fixation tels que vis, écrous, rivets, malgré la découpe des éléments de jonction. Par ailleurs, ces orifices peuvent également servir ultérieurement à la fixation d'une structure externe à l'assemblage.

Avantageusement, les éléments de jonction peuvent être disposés de part et d'autre des extrémités emboîtées des inserts de renfort, pour un meilleur maintien de ces derniers. Notamment, les éléments de jonction peuvent relier le coin extérieur et le coin intérieur de l'assemblage.

Avantageusement, l'épaisseur d'un élément de jonction peut être constante. Autrement dit, l'élément de jonction ne présente pas d'épaisseur plus fine au niveau de la ligne de découpe. Il ne s'agit donc pas d'une ligne sécable, mais d'une ligne le long de laquelle il est possible de couper le matériau polymère pour séparer les inserts. La ligne de découpe peut éventuellement être repérée par un marquage de couleur pour faciliter la séparation des inserts après assemblage. De préférence, l'épaisseur des éléments de jonction sera choisie de manière à permettre une découpe aisée le long d'une ligne de découpe au moins d'un outil tel qu'une scie mécanique ou une scie électrique.

L'assemblage selon l'invention peut en outre présenter une ou plusieurs des caractéristiques suivantes :
- au moins un élément de jonction peut présenter sur une face externe une gorge s'étendant le long de sa ligne de découpe. Ceci peut permettre d'identifier rapidement la ligne de découpe. En outre, la gorge peut former un guide pour l'outil de coupe.
- Au moins un élément de jonction peut présenter une entaille à une extrémité de sa ligne de découpe. Ceci peut également permettre de repérer plus facilement la ligne de découpe et de positionner aisément un outil de coupe.
- La ligne de découpe peut être située à distance des inserts de renfort. Ceci peut permettre de faciliter la séparation des inserts.
- Au moins un élément de jonction comprend des nervures perpendiculaires aux directions longitudinales desdits inserts de renfort et reliées par une nervure située à distance des inserts de renfort et comportant la ligne de découpe. Les nervures peuvent permettre également de faciliter le repérage de la ligne de découpe. Par exemple, les nervures perpendiculaires aux directions longitudinales peuvent définir des caissons aisément repérables et reliés par la nervure portant la ligne de découpe.
- Les inserts de renfort peuvent être métalliques, on parle alors d'assemblage hybride, ou en matériau polymère. Les inserts de renfort peuvent par exemple être en aluminium, en alliage à base d'aluminium ou en acier, notamment en acier inoxydable. Ils peuvent également être en polypropylène ou polyamide, éventuellement renforcé, par exemple par des fibres de verre, des fibres de carbone ou autres, ou tout autre matériau polymère présentant la rigidité recherchée.
- Le matériau polymère enrobant au moins partiellement les inserts de renfort peut être du polypropylène ou un polyamide.

L'invention concerne également une face avant technique de véhicule automobile comprenant au moins un assemblage selon l'invention, dans laquelle le deuxième insert de renfort de l'assemblage forme une traverse horizontale, notamment supérieure, et le premier insert de renfort de l'assemblage forme un montant vertical. Notamment, un autre premier insert de renfort peut former un deuxième montant vertical de la FAT, solidarisé au même deuxième insert de renfort que le premier insert de renfort. Le deuxième insert de renfort est alors assemblé à son autre extrémité à l'autre premier insert de renfort de la même manière que pour le premier insert de renfort déjà mentionné, autrement dit ces deux inserts de renfort forment un assemblage selon l'invention. En variante, la FAT pourrait comprendre une autre traverse horizontale, notamment inférieure, solidarisée aux deux premiers inserts de renfort verticaux par un matériau polymère.

L'assemblage selon l'invention permet ainsi de fabriquer une structure de face avant technique monobloc, dont la traverse supérieure peut être rendue amovible après fabrication pour la maintenance en après vente. La séparation de la traverse supérieure peut être obtenue de manière simple, avec un temps d'intervention court.

L'invention est maintenant décrite en référence aux dessins annexés, non limitatifs, dans lesquels :
- la figure 1 représente une vue en perspective partielle d'un assemblage de deux inserts de renfort selon un mode de réalisation de l'invention, vu du côté de la convexité des inserts de renfort ;
- la figure 2 représente une vue en perspective partielle du même assemblage, vu du côté de la concavité des inserts de renfort ;
- la figure 3 est une vue en coupe de l'assemblage représenté figure 1 ;
- la figure 4 est une vue en perspective d'une face avant technique de véhicule automobile équipée comprenant des assemblages selon l'invention ;
- la figure 5 est une vue en perspective partielle de l'assemblage de la figure 1, auquel est assemblé un élément de structure.

Sur les figures, les mêmes éléments sont désignés par les mêmes références.

Dans la présente description, les termes avant, arrière, supérieur, inférieur, font référence aux directions avant et arrière du véhicule, lorsque l'assemblage est monté sur un véhicule. Les axes X, Y, Z, correspondent respectivement à l'axe longitudinal (d'avant en arrière), transversal et vertical du véhicule.

Par sensiblement horizontal, longitudinal ou vertical, on entend une direction/un plan formant un angle d'au plus ±20°, voire d'au plus 10° ou d'au plus 5° avec une direction/un plan horizontal, longitudinal ou vertical.

Par sensiblement parallèle, perpendiculaire ou à angle droit, on entend une direction/un angle s'écartant d'au plus ±20°, voire d'au plus 10° ou d'au plus 5° d'une direction parallèle, perpendiculaire ou d'un angle droit.

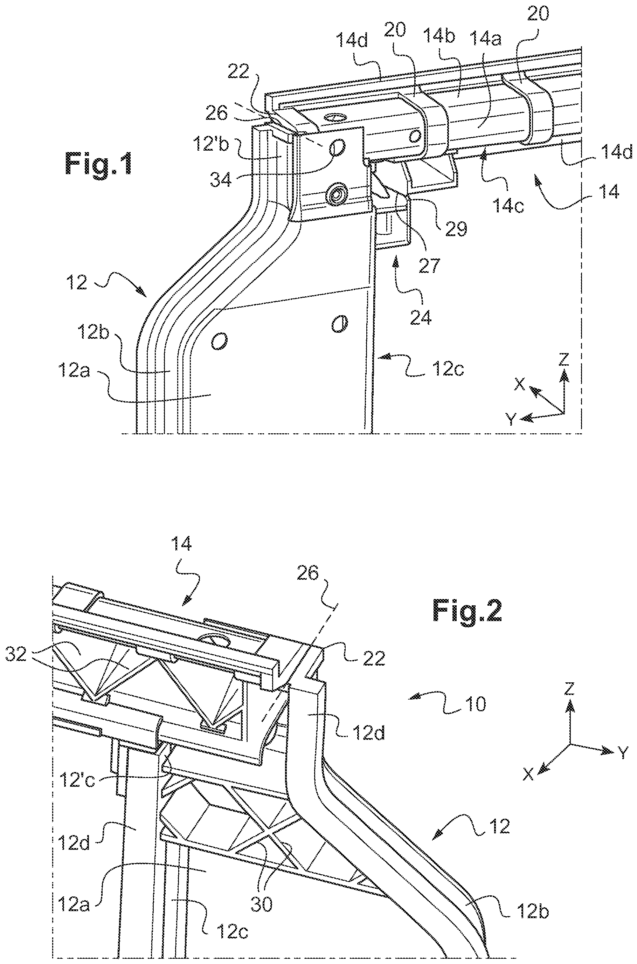

Les figures 1 à 3 représentent un assemblage 10 d'un premier insert renfort de longitudinal 12 s'étendant verticalement et d'un deuxième insert de renfort longitudinal 14 s'étendant horizontalement. Les directions longitudinales de ces inserts de renfort, 12, 14, sont perpendiculaires.

Chaque insert de renfort 12, 14, présente une section transversale ouverte concave. Ici, il s'agit d'une forme sensiblement en Ω, formé par des parois planes. Autrement dit, l'insert de renfort est formé de plusieurs parois planes reliées les unes aux autres par un bord longitudinal, de section transversale similaire à un Ω.

Ainsi, le premier insert 12 comprend une paroi de fond 12a et deux parois latérales 12b, 12c, de part et d'autre de la paroi de fond 12a. Chacune de ces parois latérales 12b, 12c, présente un rebord 12d s'étendant parallèlement à la paroi de fond 12a, à l'extérieur de l'insert. De manière similaire, le deuxième insert 14 comprend une paroi de fond plane 14a encadrée par deux parois latérales 14b, 14c, chacune de ces parois latérales 14b et 14c présentant un rebord 14d dirigé vers l'extérieur de l'insert. Chaque paroi latérale est ainsi reliée à un bord longitudinal de la paroi de fond à laquelle elle est rattachée.

Dans l'exemple représenté, la paroi de fond 12a du premier insert de renfort 12 s'étend parallèlement à la paroi de fond 14a du deuxième insert de renfort 14, sensiblement dans un même plan. En outre, les inserts de renfort 12, 14 sont orientés de sorte que chaque concavité qu'ils définissent soit dirigée dans une même direction (axe X des figures). Ceci permet de faciliter les opérations de surmoulage du matériau polymère sur les inserts de renfort 12, 14. Ce surmoulage est par exemple réalisé par injection dans un outillage réalisé en plusieurs parties.

Les parois latérales 14c et 12c sont dites parois latérales internes, les parois latérales 14b, 12b sont dites paroi latérales externes de l'assemblage 10.

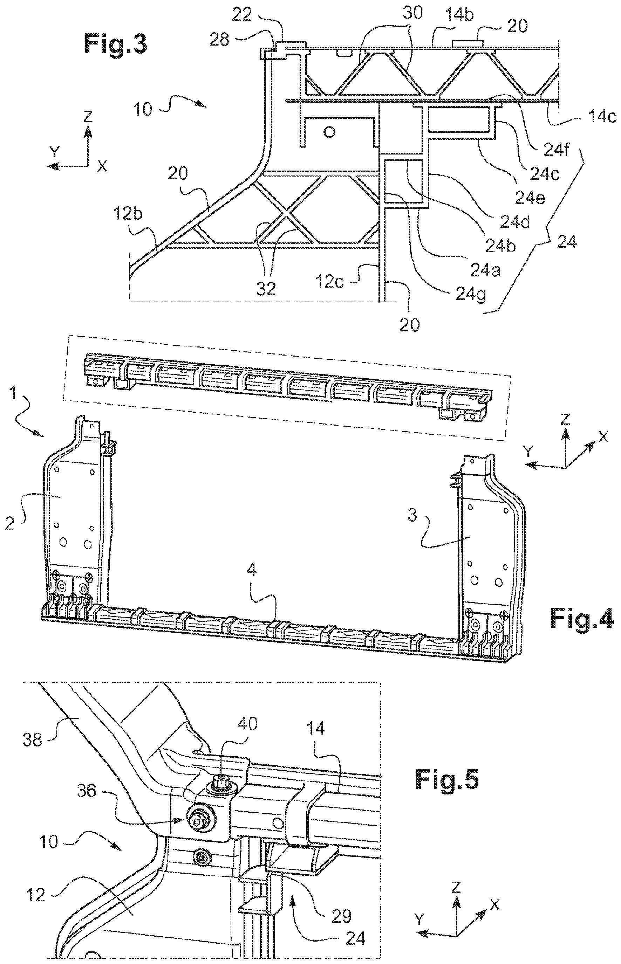

L'assemblage des inserts de renfort 12, 14 est obtenu par surmoulage d'un matériau polymère 20 les recouvrant partiellement. Ce matériau polymère 20 est visible sur les figures 1-3 mais plus nettement visible sur la figure 3. Dans l'exemple, les rebords 12d et 14d sont recouverts de matériau polymère.

On notera qu'une extrémité du deuxième insert de renfort 14 est emboîtée avec une extrémité du premier insert de renfort 12. Plus particulièrement, dans le présent exemple, l'extrémité du deuxième insert de renfort 14 s'étend au travers de la concavité définie par le premier insert de renfort 12, depuis la paroi latérale interne 12c du premier insert de renfort 12 et jusqu'à une distance prédéterminée de l'autre paroi latérale 12b (paroi latérale externe) du premier insert de renfort 12, et en regard de celle-ci (voir figures 2 et 3).

Plus précisément, dans l'assemblage 10 représenté, une portion d'extrémité 12'b de la paroi latérale externe 12b du premier insert de renfort 12 s'étend en regard de l'extrémité du deuxième insert de renfort 14, sensiblement perpendiculairement à la direction longitudinale de ce dernier. L'autre paroi latérale 12c du premier insert de renfort présente une portion d'extrémité 12'c s'étendant en regard d'une portion d'extrémité de la paroi latérale interne 14c du deuxième insert de renfort 14.

On notera ainsi que l'extrémité du deuxième insert de renfort 14 est emboîtée à l'intérieur de l'extrémité du premier insert de renfort 12 avant surmoulage du matériau polymère. Ceci permet d'obtenir une liaison robuste des deux inserts de renfort 12, 14 après surmoulage du matériau polymère.

En outre, dans cet exemple, une partie de la paroi de fond 12a de l'extrémité du premier insert de renfort 12 est en appui plan contre une partie de la paroi de fond 14a de l'extrémité du deuxième insert de renfort 14, du côté convexe de ce dernier (figure 1). Cet agencement permet d'améliorer la robustesse de l'assemblage.

Afin de réaliser l'assemblage 10, les extrémités des premier et deuxième inserts de renfort sont solidarisées par des éléments de jonction 22, 24 en matériau polymère. Ces éléments de jonctions 22, 24 sont par exemple réalisés par surmoulage, notamment par injection dans un moule, et relient des surfaces externes du premier insert de renfort 12 à des surfaces externes du deuxième insert de renfort 14. Par surface externe, on entend des surfaces situées sur des faces convexes des inserts de renfort.

Tel que visible sur la figure 3, les éléments de jonction 22, 24 recouvrent au moins partiellement les surfaces externes et sont agencés pour permettre une séparation des premier et deuxième inserts après découpe des éléments de jonction 22, 24 le long d'une ligne de découpe 26, 27 respectivement.

Dans le présent exemple, les éléments de jonction 22, 24 sont disposés de part et d'autre des extrémités emboîtées des inserts de renforts 12, 14.

Dans cet exemple, un premier élément de jonction 22 s'étend entre les parois latérales externes 12b, 14b des premier et deuxième inserts de renfort 12, 14. Ainsi, ce premier élément de jonction 22 ferme, au moins partiellement, un coin extérieur. Un deuxième élément de jonction 24 s'étend entre les parois latérales internes 12c, 14c des premier et deuxième inserts de renfort 12, 14. Ce deuxième élément de jonction 24 ferme, au moins partiellement, un coin intérieur.

Dans l'exemple représenté, le premier élément de jonction 22 se présente sous la forme d'une bande de matériau polymère reliant les parois latérales externes 12b, 14b. La ligne de découpe 26 est située entre les inserts de renfort, à savoir entre les parois latérales externes 12b, 14b. La ligne de découpe 26 s'étend ici perpendiculairement aux parois de fond 12a, 14a. La présente invention n'est toutefois pas limitée à une orientation ou disposition particulière de la ligne de découpe pourvu qu'elle permette une séparation des inserts de renfort par rupture de l'élément de jonction. Il est en outre préférable que cette ligne de découpe soit rectiligne pour faciliter la découpe en elle-même, mais une ligne courbe est également envisageable. Afin de faciliter la localisation de la ligne de découpe 26, dans le mode de réalisation représenté, l'élément de jonction 22 présente sur une face externe une gorge 28 s'étendant le long de la ligne de découpe 26 (figure 3). La ligne de découpe est ainsi facilement repérable et accessible.

Dans le présent exemple, le deuxième élément de jonction 24 comprend une pluralité de nervures 24a-e. Ces nervures 24a-e s'étendent perpendiculairement aux directions longitudinales des inserts de renfort 12, 14, parallèlement les unes aux autres. L'élément de jonction 24 comprend également des bandes de matériau polymère 24f, 24g recouvrant partiellement les surfaces externes des parois internes 12c, 14c des inserts de renfort, ces bandes 24f, 24g supportant les nervures 24a-e. Tel que représenté, le deuxième élément de jonction 24 est donc formé d'un réseau de nervures et de bandes de matériau polymère définissant des volumes parallélépipédiques (caissons) qui sont facilement repérables (voir figures 1, 3, 5). Ici, la ligne de découpe 27 est située entre deux de ces volumes, sur la nervure 24d, à distance des parois internes 12c, 14c. L'espacement ainsi obtenu permet de faciliter l'opération de découpe en rendant plus accessible la ligne de découpe 27 et de limiter les risques d'endommagement des inserts de renfort 12, 14 lors de cette opération de découpe. Tel que visible sur les figures 1 et 5, l'élément de jonction 24 présente sur une face externe une entaille 29 à une extrémité de la ligne de découpe 27. Cette entaille 29 présente une forme qui permet de guider l'outil de coupe jusqu'à la ligne de découpe 27, facilitant ainsi la mise en place de l'outil.

L'assemblage 10 selon l'invention peut en outre comprendre une pluralité de nervures 30 s'étendant perpendiculairement à la paroi de fond 12a du premier insert de renfort 12, à l'intérieur de la concavité définie par le premier insert 12, et une pluralité de nervures 32 s'étendant perpendiculairement à la paroi de fond 14a du deuxième insert de renfort 14, à l'intérieur de la concavité définie par le premier insert 14, tel que visible sur les figures 2 et 3. Ces différentes nervures 30, 32 participent à la rigidification de l'assemblage 10.

Tel que visible également sur les figures, on notera que la couche de matériau polymère 20 ne recouvre pas uniformément la totalité de la surface des deux inserts de renfort 12, 14, mais recouvre une partie notable au niveau de la jonction de ces inserts tel que précédemment décrit.

La figure 4 représente une face avant technique 1 (FAT) de véhicule automobile. Cette FAT 1 présente deux montants verticaux, 2, 3, une traverse inférieure 4 et une traverse supérieure 5. Les montants 2, 3 comprennent des inserts de renforts, tel que l'insert 12 décrit en référence aux figures 1-3 et 5. Les traverses 4, 5 comprennent également des inserts de renfort longitudinaux, du type de l'insert de renfort 14 décrit en référence aux figures 1-3 et 5. Ces montants 2, 3, 4, 5 sont assemblés par surmoulage d'un matériau polymère. En particulier, chacun des montants 2, 3 forme avec la traverse supérieure 5 un assemblage 10 au sens de l'invention, par exemple du type décrit en référence aux figures 1-3, 5. Notamment, chaque extrémité de la traverse 5 peut être emboîtée dans une extrémité d'un montant vertical suite à un déplacement vertical. A noter que les parties inférieures des montants sont fixées à la traverse inférieure de la FAT 1 par un assemblage similaire à celui de l'invention ou par tout autre assemblage adapté.

Ainsi, ces éléments 2-5 assemblés par surmoulage forment une FAT 1 monobloc, dont la traverse supérieure 5 peut être rendue amovible par découpe des lignes de découpe 26, 27 des éléments de jonction 22, 24 reliant chaque extrémité de la traverse supérieure 5 à son montant respectif 2, 3. La traverse supérieure 5 peut ainsi être démontée, tel que représenté figure 4, après découpe des éléments de jonction 22, 24.

Malgré la découpe des éléments de jonction 22, 24, la traverse supérieure 5 peut être ensuite remontée sur les montants 2, 3, sur les extrémités desquelles elle peut à nouveau s'emboîter sur les extrémités supérieures des montants. La traverse peut alors être à nouveau être solidarisée aux montants, par exemple par vissage, rivetage ou autre. A cet effet, tel que visible sur la figure 1, les parties de paroi de fond 12a, 14a des extrémités des premier et deuxième inserts de renfort 12, 14 comportent chacune au moins un orifice 34 de même axe qu'un orifice de la partie de paroi adjacente (sur la figure 1, seul l'orifice 34 de la paroi de fond 12a est visible). Une vis 36 peut alors être mise en place afin de solidariser à nouveau le deuxième insert de renfort 14 au premier insert de renfort 12, autrement dit la traverse supérieure 5 à un montant vertical 2, 3.

Tel que représenté sur la figure 5, un élément de structure 38 du véhicule, par exemple un tirant latéral, peut consolider cette solidarisation en venant s'emboîter sur les premier et deuxième inserts de renfort 12, 14, au niveau de leur jonction, puis en étant solidarisé à ces derniers par des vis (ou analogue) 36, 40. La vis 36 assure la fixation de l'élément de structure 38 mais également la solidarisation des premier et deuxième inserts de renfort 12, 14, l'autre vis 40 assurant essentiellement dans l'exemple représenté une solidarisation de l'élément de structure au deuxième insert de renfort 14.

L'assemblage décrit en référence aux figures présente deux éléments de jonction 22, 24 agencés pour être découpés tout en permettant en outre un réassemblage ultérieur des inserts de renfort. L'invention n'est toutefois pas limitée à un nombre d'éléments de jonction particulier, pourvu que le ou les éléments de jonction assurent l'assemblage des premier et deuxième inserts de renfort et puissent être coupés pour permettre une séparation de ces inserts de renfort.

L'invention n'est pas limitée non plus par la forme des inserts de renfort, notamment au niveau de leurs extrémités emboîtées, pourvu que cette forme permette le surmoulage du ou des éléments de jonction et permettent notamment de solidariser à nouveau les premier et deuxième inserts de renfort après leur séparation.

L'assemblage selon l'invention présente ainsi l'avantage de pouvoir être réalisé facilement afin de former un ensemble monobloc robuste tout en permettant une séparation ultérieure des pièces assemblées.

## Revendications

1. Assemblage (10) d'un premier insert de renfort longitudinal (12) et d'un deuxième insert de renfort longitudinal (14) par un matériau polymère (20) les recouvrant au moins partiellement, chaque insert de renfort (12, 14) présentant une paroi de fond (12a, 14a) et deux parois latérales (12b, 12c ;14b, 14c), chaque paroi latérale (12b, 12c ;14b, 14c) étant reliée à un bord longitudinal de la paroi de fond (12a, 14a) de sorte qu'un insert de renfort (12, 14) présente une section transversale ouverte concave, notamment sensiblement en forme de U ou Ω, les directions longitudinales desdits inserts de renfort (12, 14) étant sensiblement perpendiculaires et les inserts de renfort étant orientés de sorte que leur concavité soit dirigée dans une même direction, une extrémité du deuxième insert de renfort (14) étant emboîtée avec une extrémité du premier insert de renfort (12), l'assemblage étant **caractérisé en ce que** : lesdites extrémités des premier et deuxième inserts de renfort sont solidarisées par au moins deux éléments de jonction (22, 24) en matériau polymère reliant des surfaces externes du premier insert de renfort à des surfaces externes du deuxième insert de renfort, lesdits éléments de jonction (22, 24) recouvrant au moins partiellement lesdites surfaces externes et étant agencés pour permettre une séparation des premier et deuxième inserts après découpe desdits éléments de jonction le long d'au moins une ligne de découpe (26, 27).

2. Assemblage (10) selon la revendication 1, **caractérisé en ce qu'**une partie d'une paroi (12a) de ladite extrémité du premier insert de renfort (12) est en appui plan contre une partie d'une paroi (14a) de ladite extrémité du deuxième insert de renfort (14), du côté convexe de ce dernier, lesdites parties de paroi comportant chacune au moins un orifice (34) de même axe qu'un orifice de la partie de paroi adjacente.

3. Assemblage (10) selon la revendication 1 ou 2, **caractérisé en ce que** les éléments de jonction (22, 24) sont disposés de part et d'autre des extrémités emboîtées des inserts de renfort (12, 14).

4. Assemblage (10) selon l'une quelconque des revendications 1 à 3, **caractérisé en ce qu'**au moins un élément de jonction (22) présente sur une face externe une gorge (28) s'étendant le long de sa ligne de découpe (26).

5. Assemblage (10) selon l'une quelconque des revendications 1 à 4, **caractérisé en ce qu'**au moins un élément de jonction (24) présente une entaille (29) à une extrémité de sa ligne de découpe (27).

6. Assemblage (10) selon l'une quelconque des revendications 1 à 5, **caractérisé en ce que** la ligne de découpe (27) est située à distance des inserts de renfort.

7. Assemblage (10) selon l'une quelconque des revendications 1 à 6, **caractérisé en ce qu'**au moins un élément de jonction (24) comprend des nervures (24a-d) perpendiculaires aux directions longitudinales desdits inserts de renfort et reliées par une nervure (24d) située à distance des inserts de renfort et comportant sa ligne de découpe (27).

8. Assemblage (10) selon l'une quelconque des revendications 1 à 7, **caractérisé en ce que** les inserts de renfort (12, 14) sont métalliques ou en matériau polymère.

9. Face avant technique (1) de véhicule automobile comprenant au moins un assemblage (10) selon l'une quelconque des revendications 1 à 8, dans laquelle le deuxième insert de renfort (14) de l'assemblage forme une traverse horizontale (5), notamment supérieure, et le premier insert de renfort (12) de l'assemblage forme un montant vertical (2).

10. Face avant technique (1) selon la revendication 9, **caractérisée en ce qu'**elle comprend un autre premier insert de renfort (12) formant un deuxième montant vertical (3) de la face avant technique, solidarisé au même deuxième insert de renfort (14) que le premier insert de renfort, le deuxième insert de renfort (14) étant assemblé à son autre extrémité à l'autre premier insert de renfort (12) et formant un autre assemblage (10) selon l'une quelconque des revendications 1 à 8.

## Patentansprüche

1. Zusammenbau (10) eines ersten Längsverstärkungseinsatzes (12) und eines zweiten Längsverstärkungseinsatzes (14) durch ein sie zumindest teilweise bedeckendes Polymermaterial (20), wobei jeder Verstärkungseinsatz (12, 14) eine Rückwand (12a, 14a) und zwei Seitenwände (12b, 12c; 14b, 14c) aufweist, wobei jede Seitenwand (12b, 12c; 14b, 14c) mit einem Längsrand der Rückwand (12a, 14a) verbunden ist, so dass ein Verstärkungseinsatz (12, 14) einen konkaven offenen Querschnitt aufweist, insbesondere im Wesentlichen in Form eines U oder Ω, wobei die Längsrichtungen der Verstärkungseinsätze (12, 14) im Wesentlichen lotrecht und die Verstärkungseinsätze so ausgerichtet sind, dass ihre Konkavität in die gleiche Richtung gerichtet ist, wobei ein Ende des zweiten Verstärkungseinsatzes (14) mit einem Ende des ersten Verstärkungseinsatzes (12) verschachtelt ist, wobei der Zusammenbau **dadurch gekennzeichnet ist, dass**:
die Enden der ersten und zweiten Verstärkungseinsätze durch mindestens zwei Verbindungselemente (22, 24) aus Polymermaterial fest miteinander verbunden sind, die die Außenflächen des ersten Verstärkungseinsatzes mit Außenflächen des zweiten Verstärkungseinsatzes verbinden, wobei die Verbindungselemente (22, 24) die Außenflächen zumindest teilweise bedecken und eingerichtet sind, um eine Trennung der ersten und zweiten Einsätze nach dem Zerschneiden der Verbindungselemente entlang mindestens einer Schnittlinie (26, 27) zu erlauben.

2. Zusammenbau (10) nach Anspruch 1, **dadurch gekennzeichnet, dass** ein Teil einer Wand (12a) des Endes des ersten Verstärkungseinsatzes (12) in ebener Auflage gegen einen Teil einer Wand (14a) des Endes des zweiten Verstärkungseinsatzes (14) auf dessen konvexer Seite ist, wobei die Wandteile je mindestens eine Öffnung (34) gleicher Achse wie eine Öffnung des benachbarten Wandteils aufweisen.

3. Zusammenbau (10) nach Anspruch 1 oder 2, **dadurch gekennzeichnet, dass** die Verbindungselemente (22, 24) zu beiden Seiten der ineinander verschachtelten Enden der Verstärkungseinsätze (12, 14) angeordnet sind.

4. Zusammenbau (10) nach einem der Ansprüche 1 bis 3, **dadurch gekennzeichnet, dass** mindestens ein Verbindungselement (22) auf einer Außenseite eine Rille (28) aufweist, die sich entlang seiner Schnittlinie (26) erstreckt.

5. Zusammenbau (10) nach einem der Ansprüche 1 bis 4, **dadurch gekennzeichnet, dass** mindestens ein Verbindungselement (24) eine Einkerbung (29) an einem Ende seiner Schnittlinie (27) aufweist.

6. Zusammenbau (10) nach einem der Ansprüche 1 bis 5, **dadurch gekennzeichnet, dass** die Schnittlinie (27) sich in Abstand zu den Verstärkungseinsätzen befindet.

7. Zusammenbau (10) nach einem der Ansprüche 1 bis 6, **dadurch gekennzeichnet, dass** mindestens ein Verbindungselement (24) Rippen (24a-d) lotrecht zu den Längsrichtungen der Verstärkungseinsätze und durch eine Rippe (24d) verbunden aufweist, die sich in Abstand zu den Verstärkungseinsätzen befindet und seine Schnittlinie (27) aufweist.

8. Zusammenbau (10) nach einem der Ansprüche 1 bis 7, **dadurch gekennzeichnet, dass** die Verstärkungseinsätze (12, 14) aus Metall oder Polymermaterial sind.

9. Frontendmodul (1) eines Kraftfahrzeugs, das mindestens einen Zusammenbau (10) nach einem der Ansprüche 1 bis 8 enthält, wobei der zweite Verstärkungseinsatz (14) des Zusammenbaus einen waagrechten, insbesondere oberen Querträger (5) formt, und der erste Verstärkungseinsatz (12) des Zusammenbaus eine senkrechte Säule (2) formt.

10. Frontendmodul (1) nach Anspruch 9, **dadurch gekennzeichnet, dass** es einen weiteren ersten Verstärkungseinsatz (12) enthält, der eine zweite senkrechte Säule (3) des Frontendmoduls formt, die fest mit dem gleichen zweiten Verstärkungseinsatz (14) wie der erste Verstärkungseinsatz verbunden ist, wobei der zweite Verstärkungseinsatz (14) an seinem anderen Ende mit dem anderen ersten Verstärkungseinsatz (12) zusammengebaut ist und einen anderen Zusammenbau (10) nach einem der Ansprüche 1 bis 8 formt.

## Claims

1. Assembly (10) of a first longitudinal reinforcement insert (12) and of a second longitudinal reinforcement insert (14) by a polymer material (20) which covers them at least in part, each reinforcement insert (12, 14) having a bottom wall (12a, 14a) and two side walls (12b, 12c; 14b, 14c), each side wall (12b, 12c; 14b, 14c) being connected to a longitudinal edge of the bottom wall (12a, 14a) such that a reinforcement insert (12, 14) has a concave open cross section, especially substantially in the form of a U or Q, the longitudinal directions of said reinforcement inserts (12, 14) being substantially perpendicular and the reinforcement inserts being oriented such that the concavity thereof is directed in a same direction,
- one end of the second reinforcement insert (14) being interlocked with one end of the first reinforcement insert (12), the assembly being **characterized in that**
- said ends of the first and second reinforcement inserts are rigidly connected to one another by at least two connecting elements (22, 24) in polymer material which connect outer surfaces of the first reinforcement insert to outer surfaces of the second reinforcement insert, said connecting elements (22, 24) covering said outer surfaces at least in part and being arranged in order to allow separation of the first and second inserts once said connecting elements have been cut along at least one cutting line (26, 27).

2. Assembly (10) according to Claim 1, **characterized in that** part of a wall (12a) of said end of the first reinforcement insert (12) bears flatly against part of a wall (14a) of said end of the second reinforcement insert (14), on the convex side of this latter, said wall parts each comprising at least one opening (34) having the same axis as an opening in the adjacent part of the wall.

3. Assembly (10) according to Claim 1 or 2, **characterized in that** the connecting elements (22, 24) are arranged on both sides of the interlocked ends of the reinforcement inserts (12, 14).

4. Assembly (10) according to any one of Claims 1 to 3, **characterized in that**, on an outer surface, at least one connecting element (22) has a groove (28) which extends along the cutting line (26) thereof.

5. Assembly (10) according to any one of Claims 1 to 4, **characterized in that** at least one connecting element (24) has a notch (29) at an end of the cutting line (27) thereof.

6. Assembly (10) according to any one of Claims 1 to 5, **characterized in that** the cutting line (27) is situated at a distance from the reinforcement inserts.

7. Assembly (10) according to any one of Claims 1 to 6, **characterized in that** at least one connecting element (24) includes ribs (24a-d) which are perpendicular to the longitudinal directions of said reinforcement inserts and are connected by a rib (24d) which is situated at a distance from the reinforcement inserts and comprises the cutting line (27) thereof.

8. Assembly (10) according to any one of Claims 1 to 7, **characterized in that** the reinforcement inserts (12, 14) are metallic or in polymer material.

9. Technical front end (1) of a motor vehicle including at least one assembly (10) according to any one of Claims 1 to 8, in which the second reinforcement insert (14) of the assembly forms a horizontal cross member (5), especially an upper cross member, and the first reinforcement insert (12) of the assembly forms a vertical upright (2).

10. Technical front end (1) according to Claim 9, **characterized in that** said technical front end includes another first reinforcement insert (12) which forms a second vertical upright (3) of the technical front end and is rigidly connected to the same second reinforcement insert (14) as the first reinforcement insert, the second reinforcement insert (14) being joined at its other end to the other first reinforcement insert (12) and forming another assembly (10) according to any one of Claims 1 to 8.
